# FASCICULE DE BREVET EUROPEEN

(11) **EP 3 795 447 B1**
(45) Date de publication et mention de la délivrance du brevet: **22.06.2022**
(21) Numéro de dépôt: 20196150.5
(22) Date de dépôt: 15.09.2020
(51) Int. Cl.: B61H 9/00, B60T 17/22, B61C 17/12, B61H 13/20, B60T 13/66

(54) **SYSTÈME D'INTERFACE DE SECOURS ENTRE DEUX VÉHICULES FERROVIAIRES DISTINCTS, VÉHICULE FERROVIAIRE ET PROCÉDÉ ASSOCIÉS**
SICHERUNGS-SCHNITTSTELLENSYSTEM ZWISCHEN ZWEI VERSCHIEDENEN SCHIENENFAHRZEUGEN, ENTSPRECHENDES SCHIENENFAHRZEUG UND VERFAHREN
EMERGENCY INTERFACE SYSTEM BETWEEN TWO SEPARATE RAILWAY VEHICLES, ASSOCIATED RAILWAY VEHICLE AND METHOD

(30) Priorité: 17.09.2019 FR 1910234
(43) Date de publication de la demande: 24.03.2021
(73) Titulaire: SpeedInnov, 75008 Paris (FR)
(72) Inventeur: BRISOU, Florent, 17540 Fontpantour de Verines (FR)
(74) Mandataire: Lavoix

(56) Documents cités:
- EP-A1- 2 952 405
- WO-A1-2015/044319
- US-A1- 2019 111 904

## Description

La présente invention concerne un système d'interface de secours entre deux véhicules ferroviaires distincts comprenant au moins un véhicule ferroviaire à commande électrique de freinage, le système étant propre à être embarqué à bord d'une voiture, notamment d'extrémité, du véhicule ferroviaire à commande électrique de freinage.

Par véhicule ferroviaire, en entend une voiture motorisée ou non, une locomotive ou un ensemble formé de locomotives et voitures, ou encore un ensemble composé de voitures, la motorisation du véhicule étant répartie le long desdites voitures. Le véhicule ferroviaire est destiné à circuler sur des rails et comporte classiquement des roues en contact avec ces rails.

L'invention concerne également un véhicule ferroviaire comprenant un tel système d'interface de secours.

L'invention concerne également un procédé de mise en oeuvre d'une opération de secours associé, le procédé étant mis en oeuvre par un tel système d'interface de secours.

L'introduction de systèmes de freinage ferroviaire de type électropneumatique direct implique de pouvoir assurer un minimum de fonctions et de performances en cas de nécessité de secours en ligne d'un véhicule ferroviaire par un autre véhicule ferroviaire, ou par une motrice dédiée au secours équipée d'un système de freinage à commande pneumatique.

Par « secours », il est fait référence par exemple aux situations où le réseau informatique de bord d'un véhicule ferroviaire à commande électrique de freinage présente une défaillance majeure empêchant d'appliquer le freinage souhaité, ou une perte d'alimentation haute tension, ou encore une situation de remorquage pour maintenance qui nécessite une rupture d'autonomie du véhicule ferroviaire à commande électrique de freinage.

Par système de freinage ferroviaire de type électropneumatique direct on entend un système de freinage à commande électrique où l'ordre de commande du freinage de service (i.e. en mode opérationnel nominal) comme l'ordre de commande du freinage d'urgence (i.e. en mode opérationnel d'urgence) sont des ordres électriques envoyés par un réseau informatique de bord et/ou par des lignes électriques suivant une action sur une commande manuelle dédiée à l'activation d'un freinage de service ou d'urgence par le conducteur du véhicule ferroviaire.

Par « freinage de service » on entend le freinage mis en oeuvre au sein du véhicule ferroviaire pour, en mode opérationnel nominal, réguler sa vitesse tout au long de son trajet (i.e. freiner plus ou moins fortement).

Par « freinage d'urgence » on entend le freinage mis en oeuvre pour arrêter le véhicule ferroviaire en cas de situation potentiellement dangereuse pour le véhicule ferroviaire, avec un niveau de performance et de sécurité spécifiés. Un système de freinage d'urgence est notamment décrit dans le document US 2019/111904 A1.

Afin de permettre une compatibilité minimale entre différents véhicules ferroviaires par exemple entre un véhicule ferroviaire à système de freinage purement pneumatique et un véhicule ferroviaire à système de freinage électropneumatique direct, dit freinage électrique par la suite, des systèmes d'interface existent, tels que décrits dans le document EP 2 952 405 A1.

Toutefois la compatibilité obtenue n'est généralement pas satisfaisante dans l'état de la technique car elle n'est généralement pas complètement réversible et universelle d'un véhicule ferroviaire à l'autre.

Ainsi, l'invention a notamment pour but de garantir une telle compatibilité quelle que soit la configuration de secours ou de besoin de secours rencontrée par un véhicule ferroviaire à système de freinage électrique.

A cet effet, l'invention a pour objet un système d'interface de secours entre deux véhicules ferroviaires distincts comprenant au moins un véhicule ferroviaire à commande électrique de freinage, le système étant propre à être embarqué à bord d'une voiture, notamment d'extrémité, du véhicule ferroviaire à commande électrique de freinage, le système comprenant au moins :
- une conduite de commande pneumatique connectable entre les deux véhicules ferroviaires distincts,
- un dispositif de modulation de pression dont au moins une entrée est propre à être connectée à une ligne de freinage électrique d'urgence, et dont une sortie est propre à être connectée à ladite conduite de commande pneumatique,
- un dispositif de mesure de pression dont une entrée est propre à être connectée à ladite conduite de commande pneumatique et dont une sortie est propre à être connectée à ladite ligne de freinage électrique d'urgence.

Ainsi, selon la présente invention, la commande de secours utilisée entre deux véhicules ferroviaires connecté à la conduite de commande pneumatique, jouant le rôle d'interface de secours, est une commande pneumatique à savoir une pression.

Plus précisément, du côté du véhicule ferroviaire à commande électrique de freinage, une telle commande pneumatique est propre à être traitée par deux éléments distincts connectés à la conduite de commande pneumatique, à savoir le dispositif de génération de consigne électrique d'une part et le dispositif de mesure de pression d'autre part.

Par dispositif de mesure de pression, on entend un dispositif propre à convertir la pression mesurée en un ordre électrique (i.e. une consigne électrique). Un tel dispositif de mesure de pression correspond, par exemple, à la combinaison d'un manostat et d'un module de génération de consigne électrique en fonction de la lecture de pression restituée par le manostat.

Le dispositif de modulation, par son agencement au sein du système est propre à convertir un ordre électrique en ladite commande pneumatique tandis que le dispositif de mesure de pression est propre à convertir ladite commande pneumatique en ordre électrique.

La présence de ces deux éléments distincts, à savoir le dispositif de modulation d'une part et le dispositif de mesure de pression d'autre part, propres à mettre en oeuvre des conversions inverses l'une de l'autre et dédiées, permet d'assurer une compatibilité optimale quelle que soit la configuration (i.e. les deux types de véhicules ferroviaires impliqués dans la situation de secours) rencontrée.

Suivant d'autres aspects avantageux de l'invention, le système d'interface de secours comprend une ou plusieurs des caractéristiques suivantes, prises isolément ou suivant toutes les combinaisons techniquement possibles :
- le déploiement de la conduite de commande pneumatique au sein du véhicule ferroviaire à commande électrique de freinage est limité à la voiture d'extrémité, du véhicule ferroviaire à commande électrique de freinage ;
- le dispositif de modulation de pression comprend un module d'échappement d'urgence et un module de régulation de la pression à une pression prédéterminée ;
- le système d'interface de secours comprend en outre un commutateur multi-position activant en fonction de sa position un des modes de fonctionnement du système d'interface de secours appartenant au groupe comprenant au moins :
- un mode secouru dudit véhicule ferroviaire à commande électrique de freinage, de préférence au moins propre à activer un mode secours d'une batterie dudit véhicule ou une alimentation fournie par le véhicule ferroviaire secourant;
   - un mode secourant dudit véhicule ferroviaire à commande électrique de freinage ;
- le système d'interface de secours comprend en outre :
   - un convertisseur de pression en un signal électrique ;
   - une carte électronique propre à être intégrée au sein d'un module électronique de commande frein ;

   une entrée du convertisseur étant propre à être connectée à la conduite de commande pneumatique et une sortie du convertisseur étant propre à être connectée à une entrée de la carte électronique dont une sortie est propre à être connectée à un ensemble de lignes électriques de commande du freinage de service distinctes de la ligne de freinage électrique d'urgence
      - en mode secourant, le dispositif de modulation de pression est propre à moduler une pression de commande au sein de la conduite de commande pneumatique destinée à commander l'autre véhicule ferroviaire en mode secouru,
   le dispositif de mesure de pression étant propre à contrôler en continu, pendant toute la phase de secours de l'autre véhicule ferroviaire en mode secouru, la valeur de la pression au sein de la conduite de commande pneumatique connectable entre les deux véhicules ferroviaires distincts et à activer électriquement la ligne de freinage d'urgence dudit véhicule ferroviaire à commande électrique de freinage en mode secourant lorsque ladite valeur appartient à une plage de pression prédéterminée,
   le convertisseur étant propre à transformer en continu la pression au sein de la conduite de commande pneumatique en un signal électrique propre à être retransmis par ladite carte électronique à l'ensemble de lignes électriques de commande de freinage de service tant que la valeur de la pression au sein de la conduite de commande pneumatique reste en dehors de ladite plage de pression prédéterminée ;
      - en mode secouru, ladite conduite de commande pneumatique connectable entre les deux véhicules ferroviaires distinctes est propre à recevoir une pression de commande émise par l'autre véhicule ferroviaire en mode secourant,
   le dispositif de mesure de pression étant propre à contrôler en continu, pendant toute la phase de secours dudit véhicule ferroviaire à commande électrique de freinage en mode secouru, la valeur de la pression au sein de la conduite de commande pneumatique connectable entre les deux véhicules ferroviaires distincts et à activer électriquement la ligne de freinage d'urgence dudit véhicule ferroviaire à commande électrique de freinage en mode secouru lorsque ladite valeur appartient à une plage de pression prédéterminée, le convertisseur étant propre à transformer en continu la pression au sein de la conduite de commande pneumatique en un signal électrique propre à être retransmis par ladite carte électronique à l'ensemble de lignes électriques de commande de freinage de service tant que la valeur de la pression au sein de la conduite de commande pneumatique reste en dehors de ladite plage de pression prédéterminée.

L'invention a également pour objet un véhicule ferroviaire à commande électrique de freinage comprenant le système d'interface de secours précité selon la présente invention.

L'invention a également pour objet un procédé de mise en œuvre d'une opération de secours entre deux véhicules ferroviaires distincts comprenant au moins un véhicule ferroviaire à commande électrique de freinage, le procédé étant propre à être mis en œuvre par un système d'interface de secours embarqué à bord d'une voiture, notamment d'extrémité, du véhicule ferroviaire à commande électrique de freinage, le procédé étant propre à mettre en œuvre un mode secourant et/ou un mode secouru, le procédé comprenant :
- dans le mode secourant les étapes suivantes :
   - une modulation par un dispositif de modulation dudit système d'interface de secours d'une pression de commande au sein d'une conduite de commande pneumatique connectable entre les deux véhicules ferroviaires distincts, ladite pression de commande étant destinée à commander l'autre véhicule ferroviaire,
   - un contrôle continu par un dispositif de mesure de pression dudit système d'interface de secours, pendant toute la phase de secours de l'autre véhicule ferroviaire en mode secouru, de la valeur de la pression au sein de la conduite de commande pneumatique connectable entre les deux véhicules ferroviaires distincts et une activation électrique d'une ligne de freinage d'urgence dudit véhicule ferroviaire à commande électrique de freinage en mode secourant lorsque ladite valeur appartient à une plage de pression prédéterminée,
   - une transformation (64) continue, par un convertisseur de pression en un signal électrique dudit système d'interface de secours, de la pression au sein de la conduite de commande pneumatique en un signal électrique propre à être retransmis par ladite carte électronique à un ensemble de lignes électriques de commande de freinage de service tant que la valeur de la pression au sein de la conduite de commande pneumatique reste en dehors de ladite plage de pression prédéterminée.
- dans le mode secouru les étapes suivantes :
   - une réception au sein de la conduite de commande pneumatique connectable entre les deux véhicules ferroviaires distincts d'une pression de commande émise par l'autre véhicule ferroviaire en mode secourant,
   - un contrôle continu par un dispositif de mesure de pression dudit système d'interface de secours, pendant toute la phase de secours dudit véhicule ferroviaire à commande électrique de freinage en mode secouru, de la valeur de la pression au sein de la conduite de commande pneumatique connectable entre les deux véhicules ferroviaires distincts et une activation électrique d'une ligne de freinage d'urgence dudit véhicule ferroviaire à commande électrique de freinage en mode secouru lorsque ladite valeur appartient à une plage de pression prédéterminée,
   - une transformation continue, par un convertisseur de pression en un signal électrique dudit système d'interface de secours, de la pression au sein de la conduite de commande pneumatique en un signal électrique propre à être retransmis par ladite carte électronique à un ensemble de lignes électriques de commande de freinage de service tant que la valeur de la pression au sein de la conduite de commande pneumatique reste en dehors de ladite plage de pression prédéterminée.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
[Fig 1] la figure 1 est une représentation schématique d'un système d'interface de secours selon l'invention dans un mode secouru;
[Fig 2]; la figure 2 est une représentation schématique d'un système d'interface de secours selon l'invention dans un mode secourant,
[Fig 3] la figure 3 est un organigramme d'un procédé de mise en œuvre d'une opération de secours selon l'invention.

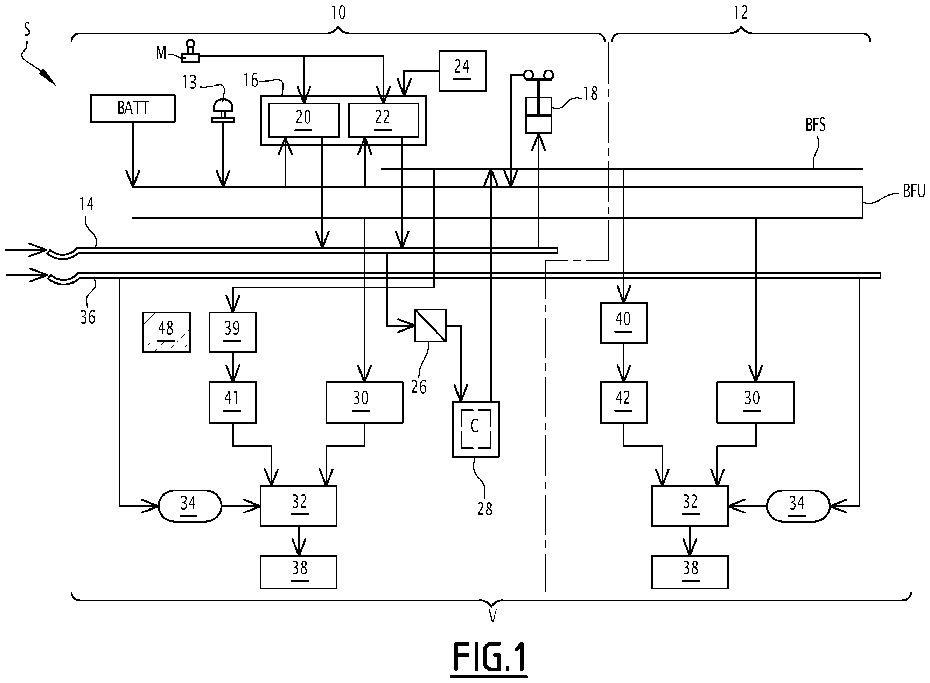

La figure 1 est une représentation schématique d'un véhicule ferroviaire V à commande électrique de freinage. Le véhicule comprend au moins une voiture d'extrémité telle qu'une motrice ou une voiture, motorisée ou non 10. Avantageusement, le véhicule comprend un tronçon de ligne 12 composé par exemple de voiture(s) ferroviaire(s) non représentée(s). Le véhicule est soit à motorisation concentrée et comprend alors généralement une motrice de tête et une motrice de queue, soit à motorisation répartie et comprend alors une voiture de tête et une voiture de queue, ainsi qu'une motorisation réparties dans les différentes voiture le composant. En d'autres termes, dans ce type de véhicule V, l'ordre de commande freinage de service (i.e. le freinage mis en œuvre en mode de fonctionnement nominal du véhicule V) est un ordre électrique transmis de la voiture d'extrémité 10 à chaque voiture du tronçon de ligne 12 via un réseau informatique de bord (TCMS de l'anglais *Train Control and Management System*), et l'ordre de freinage d'urgence est également électrique notamment propre à être généré électriquement par un bouton d'activation manuelle 13 présent dans la voiture d'extrémité 10 et transmis aux éléments de freinage d'urgence via une ligne de freinage d'urgence BFU.

Avantageusement, le véhicule ferroviaire comprend deux voitures d'extrémités 10 chacune propre à transmettre un ordre électrique de commande de freinage de service et un ordre électrique de commande de freinage d'urgence.

Selon la présente invention, un système S d'interface de secours entre une voiture d'extrémité 10 du véhicule ferroviaire V et un autre véhicule ferroviaire non représenté, notamment une voiture d'extrémité d'un autre véhicule ferroviaire, est embarqué à bord de la ou de chaque voiture d'extrémité 10 du véhicule ferroviaire V à commande électrique de freinage. Le système d'interface de secours S comprend au moins la conduite de commande pneumatique 14 dont une extrémité est directement connectée à la voiture d'extrémité 10 du véhicule ferroviaire V et dont l'autre extrémité est connectable à une conduite de commande pneumatique de l'autre véhicule ferroviaire non représenté, qui est propre à secourir le véhicule ferroviaire V ou à être secourue par le véhicule ferroviaire V.

Le système d'interface de secours S selon la présente invention comprend en outre un dispositif de modulation de pression 16 dont une entrée est propre à être connectée à la ligne de freinage électrique d'urgence BFU, et dont la sortie est propre à être connectée à la conduite de commande pneumatique 14.

De plus, le système d'interface de secours S selon la présente invention comprend un dispositif de mesure de pression 18 dont l'entrée est propre à être connectée à la conduite de commande pneumatique 14 et dont la sortie est propre à être connectée à la ligne de freinage électrique d'urgence BFU.

Un tel dispositif de mesure de pression 18 est propre à convertir la pression mesurée en un ordre électrique (i.e. une consigne électrique) et correspond, par exemple, à la combinaison d'un manostat et d'un module de génération de consigne électrique en fonction de la lecture de pression restituée par le manostat.

Par « embarqué » on considère que le système d'interface de secours S selon la présente invention n'est pas un dispositif additionnel portable à connecter à la voiture d'extrémité 10 du véhicule ferroviaire V mais un système dont les éléments sont conçus pour rester en permanence embarqués (voire complètement intégrés) dans le véhicule V afin que le système d'interface de secours S soit disponible en permanence et soit propre à être activé rapidement puisque déjà connecté en permanence à la voiture d'extrémité 10. En d'autres termes, en présence d'une situation de secours seul le raccordement à l'autre véhicule ferroviaire distinct du véhicule V est nécessaire, alors qu'un système d'interface portable requiert à la fois une connexion au véhicule ferroviaire V et une connexion à l'autre véhicule ferroviaire distinct du véhicule ferroviaire V.

Selon un aspect particulier de l'invention, le déploiement de la conduite de commande pneumatique 14 est limité à la voiture d'extrémité 10 du véhicule ferroviaire V. En d'autres termes, la conduite de commande pneumatique ne se poursuit pas dans le tronçon de ligne 12. Sa longueur réduite à celle de la voiture d'extrémité 10 permet de limiter le coût d'installation et de maintenance du système d'interface de secours selon la présente invention.

Avantageusement chaque voiture d'extrémité comprend un système d'interface de secours S respectif.

Le dispositif de modulation de pression 16 comprend un module d'échappement d'urgence 20 et un module de régulation de la pression 22 à une pression prédéterminée, par exemple propre à générer au maximum une pression de l'ordre de 5 bars (à plus ou moins 10%).

Autrement dit, le module d'échappement d'urgence 20 est propre à relâcher (i.e. diminuer) la pression au sein de la conduite de commande pneumatique 14 tandis que le module de régulation de la pression 22 est propre à générer une pression, l'action conjointe du module d'échappement d'urgence 20 et du module de régulation de la pression 22 permet notamment d'atteindre au sein de la conduite de commande pneumatique 14 la pression prédéterminée souhaitée correspondant à un ordre de freinage prédéterminé.

Selon un aspect particulier de l'invention, le système d'interface de secours S comprend en outre un commutateur 24 multi-position activant en fonction de sa position un des modes de fonctionnement du système d'interface de secours S appartenant au groupe comprenant au moins : un mode opérationnel nominal du véhicule ferroviaire V à commande électrique de freinage, un mode secouru du véhicule ferroviaire V à commande électrique de freinage, un mode secourant du véhicule ferroviaire V à commande électrique de freinage.

En mode secouru, le véhicule ferroviaire V est notamment propre à être tracté ou poussé par le véhicule ferroviaire secourant non représenté.

Selon un aspect particulier, deux modes secourus sont sélectionnables via le commutateur 24 à savoir un mode « secouru tracté » et un mode « secouru poussé ».

En complément facultatif, le système d'interface de secours S comprend en outre : un convertisseur de pression 26 en un signal électrique, et une carte électronique C propre à être intégrée au sein d'un module électronique de commande de frein 28. L'entrée du convertisseur 26 est propre à être connectée à la conduite de commande pneumatique 14 et une sortie du convertisseur 26 est propre à être connectée à une entrée de la carte électronique C dont une sortie est propre à être connectée à un ensemble de lignes électriques de commande de freinage de service BFS distinctes de la ligne de freinage électrique d'urgence BFU.

En particulier, en mode secouru, tel qu'illustré par la figure 1, la conduite de commande pneumatique 14 est connectée entre les deux véhicules ferroviaires distincts et est propre à recevoir une pression de commande émise par l'autre véhicule ferroviaire (distinct du véhicule ferroviaire à commande électrique V) alors en mode secourant.

La conduite de commande pneumatique 14 est alors propre à faire l'interface entre les deux véhicules ferroviaires, en transmettant un ordre pneumatique émis par le véhicule secourant (non représentée) au véhicule ferroviaire à commande électrique V secouru. Dans cette situation correspondant à la position du commutateur 24 en mode secouru, le dispositif de mesure de pression 18 est propre à contrôler en continu, pendant toute la phase de secours du véhicule ferroviaire V à commande électrique de freinage, la valeur de la pression au sein de la conduite de commande pneumatique 14 et à activer électriquement la ligne de freinage d'urgence BFU du véhicule ferroviaire à commande électrique de freinage en mode secouru lorsque la valeur appartient à une plage de pression prédéterminée.

Une telle « lecture » en continu du dispositif de mesure de pression 18 pendant la phase de secours permet l'activation de la ligne de freinage d'urgence BFU du véhicule ferroviaire à commande électrique V secouru, que ce soit à l'initiative du véhicule ferroviaire à commande électrique V secouru ou à l'initiative de l'autre véhicule ferroviaire secourant.

Autrement dit, lorsque la valeur de la pression reçue au sein de la conduite de commande pneumatique 14 appartient à une plage de pression prédéterminée, le dispositif de mesure de pression 18 dédié, selon la présente invention, à la surveillance de la pression au sein de la conduite de commande pneumatique 14 transforme l'ordre pneumatique émis par le véhicule secourant en un ordre électrique transmis à la ligne de freinage d'urgence BFU du véhicule ferroviaire à commande électrique V secouru, alimentée elle-même électriquement par une batterie BATT. La batterie BATT est également propre à alimenter électriquement des équipements du véhicule ferroviaire V secouru tels que les équipements de signalisation avant/arrière, des module(s) électronique(s) de commande de freinage réparti(s) sur le tronçon 12, ou encore le module électronique de commande de frein 28.

La ligne de freinage d'urgence BFU recevant un tel ordre électrique du dispositif de mesure de pression active alors l'électrovalve 30 de la voiture d'extrémité 10 comme celle(s) du tronçon 12, c'est à dire des autres voitures du véhicule, pour agir respectivement sur leur propre relais pneumatique 32. Chaque relais pneumatique 32 est alimenté via un réservoir d'air 34 par une conduite d'alimentation pneumatique 36 connectée à la fois au véhicule ferroviaire secourant non représentée et au véhicule ferroviaire à commande électrique V secouru, la conduite d'alimentation pneumatique 36, à la différence de la conduite de commande pneumatique 14 étant déployée sur l'ensemble de la longueur du véhicule V.

Chaque relais pneumatique 32 ainsi alimenté par son réservoir d'air 34 actionne alors respectivement les cylindres de frein 38 de la voiture d'extrémité 10 comme ceux de la ou des voitures du tronçon 12 auxquelles il est associé.

En revanche, lorsque la valeur de la pression reçue au sein de la conduite de commande pneumatique 14 reste en dehors de la plage de pression prédéterminée (par exemple en mode tracté ou poussé du véhicule ferroviaire V à commande électrique de freinage par l'autre véhicule secourant sans qu'un freinage d'urgence ne soit nécessaire), le convertisseur 26 est propre à transformer en continu la pression au sein de la conduite de commande pneumatique 14 en un signal électrique propre à être retransmis par la carte électronique C aux lignes électriques de commande de freinage de service BFS.

L'ensemble de lignes électriques de commande de freinage de service BFS active alors électriquement le module 39 électronique de commande de frein de la voiture d'extrémité 10 ainsi qu'un ou plusieurs module(s) 40 électronique(s) de commande de freinage (EBC de l'anglais *Electronic Brake Control*) réparti(s) au sein du tronçon 12 dont la sortie est connectée à un convertisseur 41 respectivement 42 propre à transformer un signal électrique en une pression d'activation du relais pneumatique 32 tel que décrit précédemment qui lui est associé.

En mode « secouru poussé ou tracté », la valeur de la pression reçue au sein de la conduite de commande pneumatique 14 peut être également ajustée par l'intermédiaire d'un manipulateur M commandant, sur la voiture d'extrémité 10 du véhicule ferroviaire à commande électrique V secouru, le module d'échappement d'urgence 20 et le module de régulation de la pression 22 constituant le dispositif de modulation de pression 16.

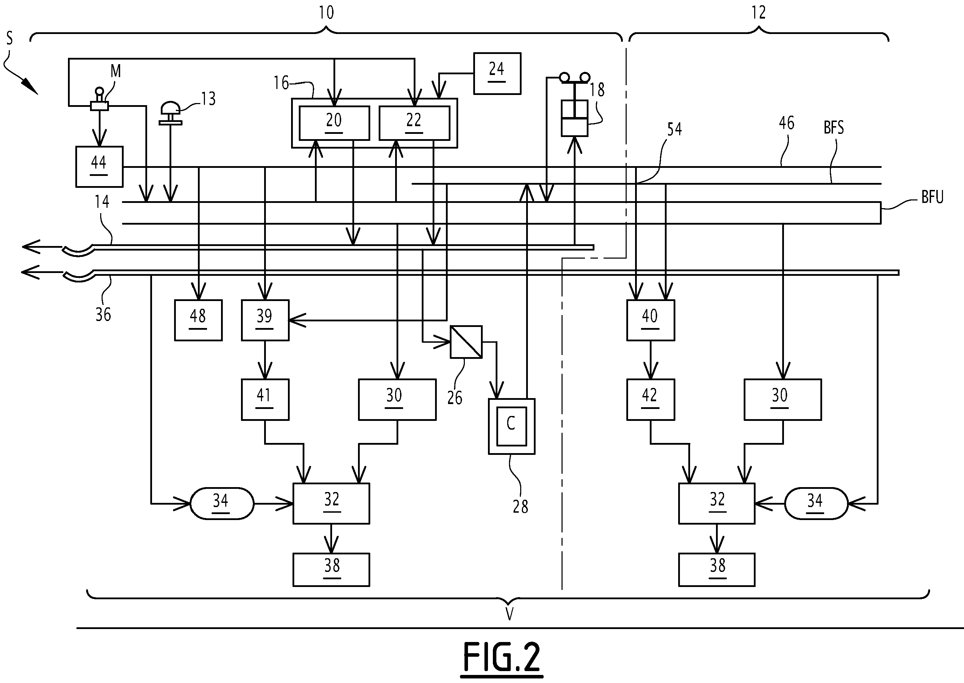

En mode secourant, tel qu'illustré par la figure 2, la conduite de commande pneumatique 14 est également connectée aux deux véhicules ferroviaires distincts, et est, au contraire du mode secouru illustré par la figure 1, propre à transmettre une pression de commande émise par la voiture d'extrémité 10 à l'autre véhicule ferroviaire non représenté et à le secourir.

La conduite d'alimentation pneumatique 36 du véhicule secourant V, en mode secourant est propre à être connectée au véhicule ferroviaire à secourir non représenté afin de lui fournir une alimentation pneumatique de secours.

Dans cette situation, correspondant à la position du commutateur 24 en mode secourant, le dispositif de modulation de pression 16, via son module d'échappement d'urgence 20 et via son module de régulation de la pression 22 est propre à moduler une pression de commande au sein de la conduite de commande pneumatique 14 destinée à commander l'autre véhicule ferroviaire en mode secouru.

En parallèle, le dispositif de mesure de pression 18 est propre à contrôler en continu (de même qu'en mode secouru), pendant toute la phase de secours de l'autre véhicule ferroviaire en mode secouru, la valeur de la pression au sein de la conduite de commande pneumatique 14 et à activer électriquement la ligne de freinage d'urgence BFU dudit véhicule V ferroviaire à commande électrique de freinage en mode secourant lorsque cette valeur de pression appartient à une plage de pression prédéterminée.

Une telle « lecture » en continu du dispositif de mesure de pression 18 pendant la phase de secours permet l'activation de la ligne de freinage d'urgence BFU du véhicule ferroviaire à commande électrique V secourant, que ce soit à l'initiative du véhicule ferroviaire à commande électrique V secourant ou à l'initiative de l'autre véhicule ferroviaire secouru.

Selon un premier cas, si un freinage d'urgence est nécessaire pendant la phase de secours, un opérateur de la voiture d'extrémité 10 du véhicule V secourant est propre à actionner le bouton d'activation manuelle 13 qui transmet un ordre électrique sur la ligne de freinage d'urgence BFU. Un tel ordre électrique est reçu électriquement par le dispositif de modulation de pression 16 qui en conséquence coordonne simultanément son module d'échappement d'urgence 20 et son module de régulation de la pression 22 pour générer une pression dont la valeur appartient à la plage de pression prédéterminée associée au freinage d'urgence.

Par exemple, pour atteindre une telle pression, le module d'échappement créer une dépression dont la valeur est supérieure à un seuil de dépression prédéterminé.

Une telle pression de valeur caractéristique au sein de la conduite de commande pneumatique 14 vaut ordre (i.e. commande) pneumatique de freinage d'urgence transmis à travers la conduite de commande pneumatique 14 à destination du véhicule ferroviaire à secourir.

Le dispositif de mesure de pression 18 contrôlant en continu la valeur de la pression au sein de la conduite de commande pneumatique 14 détecte la valeur de pression caractéristique de la nécessité d'activer le freinage d'urgence et transmet un nouvel ordre électrique sur la ligne de freinage d'urgence BFU, ou confirme l'ordre électrique généré par le bouton d'activation manuelle 13, afin d'activer les électrovalves 30, les relais pneumatiques 32, réservoirs d'air 34, et cylindres de frein 38 tel qu'expliqué précédemment en relation avec le mode secouru.

Selon un deuxième cas, seul un freinage de service est nécessaire.

Selon une première variante de ce deuxième cas, le manipulateur M en mode secourant est connecté à une unité centrale de traitement 44 propre à gérer un réseau informatique de bord 46. Au sein de la voiture d'extrémité, 10, le manipulateur M transmet son état en mode secourant à l'unité centrale de traitement 44 qui commande électriquement, au sein de la voiture d'extrémité 10, via le réseau informatique de bord 46, une unité électronique de contrôle de la propulsion 48 (PCE de l'anglais *Propulsion Controls Engineering*), un module 39 électronique de commande de frein transmettant un ordre électrique de freinage de service, à un convertisseur 41 de signal électrique en pression propre à activer le relais pneumatique 32 de la voiture d'extrémité 10.

L'unité électronique de contrôle de la propulsion 48 est représentée en hachurés sur la figure 1 associée au mode secouru car inactif ou défaillant dans ce mode secouru.

De plus, l'unité centrale de traitement 44 commande électriquement, au sein du tronçon 12, via le réseau informatique de bord 46 et une ou plusieurs liaison(s) 54, un ou plusieurs module(s) 40 électronique de commande de freinage réparti(s) dont la sortie est connectée au convertisseur 42 propre à transformer un signal électrique en une pression d'activation du relais pneumatique 32 tel que décrit précédemment qui lui est associé au sein du tronçon 12.

Selon une deuxième variante de ce deuxième cas, le manipulateur M contrôle électriquement le dispositif de modulation 16 de sorte à générer, via le module d'échappement 20 et via le module de régulation 22, une commande pneumatique de freinage de service destinée au véhicule à secourir non représenté. Le convertisseur 26 est alors propre à transformer en continu la pression au sein de la conduite de commande pneumatique 14 en un signal électrique propre à être retransmis par la carte électronique C à l'ensemble de lignes électriques de commande de freinage de service BFS tant que la valeur de la pression au sein de la conduite de commande pneumatique 14 reste en dehors de la plage de pression prédéterminée associée au freinage d'urgence.

L'ensemble de lignes électriques de commande de freinage de service BFS active alors électriquement le module 39 électronique de commande de frein de la voiture d'extrémité 10 ainsi qu'un ou plusieurs module(s) 40 électronique(s) de commande de freinage (EBC de l'anglais *Electronic Brake Control*) réparti(s) au sein du tronçon 12 dont la sortie est connectée à un convertisseur 41 respectivement 42 propre à transformer un signal électrique en une pression d'activation du relais pneumatique 32 tel que décrit précédemment qui lui est associé.

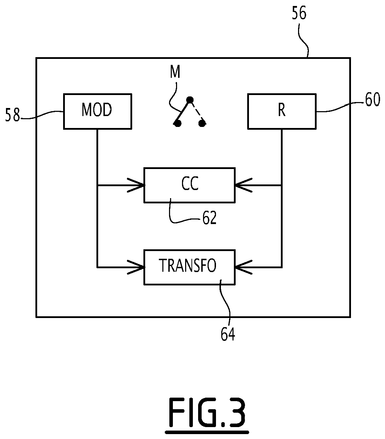

Le fonctionnement du système d'interface de secours S selon l'invention va désormais être expliqué à l'aide de la figure 3 représentant un organigramme du procédé 56, selon l'invention, le procédé étant mis en œuvre par le système d'interface de secours S selon l'invention.

Lorsque le commutateur 24 est en mode secourant, lors d'une étape 58, le dispositif de modulation 16 module une pression de commande propre à être transmis via la conduite de commande pneumatique 14 au véhicule ferroviaire à secourir par la voiture d'extrémité 10 du véhicule V.

Lorsque le commutateur 24 est en mode secouru, lors d'une étape 60, la conduite de commande pneumatique 14 reçoit un ordre pneumatique émis par un autre véhicule ferroviaire distinct du véhicule V comprenant la voiture d'extrémité 10.

Lors d'une étape 62, le dispositif de mesure de pression 18 contrôle en continu pendant toute la phase de secours la valeur de la pression au sein de la conduite de commande pneumatique 14 pour activer la ligne de freinage d'urgence BFU en présence d'une valeur de pression appartenant à une plage de pression prédéterminée.

En parallèle et en complément de l'étape 62, lors d'une étape 64 le convertisseur 26 est propre à transformer en continu la pression détectée au sein de la conduite de commande pneumatique 14 en un signal électrique propre à être retransmis par la carte électronique C aux lignes électriques de commande de freinage de service BFS tant que la valeur de la pression au sein de la conduite de commande pneumatique 14 reste en dehors de la plage de pression prédéterminée associée au freinage d'urgence.

On conçoit ainsi que le système d'interface de secours S selon l'invention embarqué à bord de la voiture d'extrémité 10 du véhicule ferroviaire V à commande électrique de freinage comprend une conduite de commande pneumatique 14, qui permet l'échange de commandes pneumatiques en mode secouru comme en mode secourant entre deux véhicules distincts, un dispositif de modulation 16 dédié à convertir un ordre électrique du véhicule V en commande pneumatique, et un dispositif de mesure de pression 18 dédié à convertir une commande pneumatique représentative de la nécessité d'activer un freinage d'urgence en ordre électrique.

En complément, facultatif, le système d'interface de secours S comprend également un convertisseur 26 associé à la carte électronique C dédiés à convertir une commande pneumatique représentative de la nécessité d'activer un freinage de service en ordre électrique.

Un tel agencement des éléments dédiés du système d'interface de secours S selon l'invention garantit une compatibilité de secours quelle que soit la situation de secours rencontrée par véhicule ferroviaire V à commande électrique de freinage, à savoir secourir ou être secouru par un véhicule ferroviaire uniquement pneumatique ou encore secourir ou être secouru par un véhicule ferroviaire à commande électrique de freinage présentant des versions logicielles de réseau informatique de bord distinct ne permettant pas l'échange direct d'ordres électriques.

## Revendications

1. Système d'interface de secours (S) entre deux véhicules ferroviaires distincts comprenant au moins un véhicule ferroviaire (V) à commande électrique de freinage, le système étant propre à être embarqué à bord d'une voiture (10), notamment d'extrémité, du véhicule ferroviaire à commande électrique de freinage, **caractérisé en ce que** le système (S) comprend au moins :
- une conduite de commande pneumatique (14) connectable entre les deux véhicules ferroviaires distincts,
- un dispositif de modulation de pression (16) dont une entrée est propre à être connectée à une ligne de freinage électrique d'urgence (BFU), et dont une sortie est propre à être connectée à ladite conduite de commande pneumatique (14),
- un dispositif de mesure de pression (18) dont une entrée est propre à être connectée à ladite conduite de commande pneumatique (14) et dont une sortie est propre à être connectée à ladite ligne de freinage électrique d'urgence (BFU).

2. Système selon la revendication 1, dans lequel le déploiement de la conduite de commande pneumatique (14) au sein du véhicule ferroviaire (V) à commande électrique de freinage est limité à la voiture d'extrémité, (10) du véhicule ferroviaire (V) à commande électrique de freinage.

3. Système selon la revendication 1 ou 2, dans lequel le dispositif de modulation de pression (16) comprend un module d'échappement d'urgence (20) et un module de régulation de la pression (22) à une pression prédéterminée.

4. Système selon l'une quelconque des revendications précédentes, comprenant en outre un commutateur (24) multi-position activant en fonction de sa position un des modes de fonctionnement du système d'interface de secours appartenant au groupe comprenant au moins :
- un mode secouru dudit véhicule ferroviaire à commande électrique de freinage, de préférence au moins propre à activer un mode secours d'une batterie dudit véhicule ou une alimentation fournie par le véhicule ferroviaire secourant;
- un mode secourant dudit véhicule ferroviaire à commande électrique de freinage.

5. Système selon l'une quelconque des revendications précédentes, comprenant en outre :
- un convertisseur de pression (26) en un signal électrique,
- une carte électronique (C) propre à être intégrée au sein d'un module (28) électronique de commande frein,
une entrée du convertisseur (26) étant propre à être connectée à la conduite de commande pneumatique (14) et une sortie du convertisseur (26) étant propre à être connectée à une entrée de la carte électronique (C) dont une sortie est propre à être connectée à un ensemble de lignes électriques de commande du freinage de service (BFS) distinctes de la ligne de freinage électrique d'urgence (BFU).

6. Système selon les revendications 4 et 5, dans lequel, en mode secourant, le dispositif de modulation de pression (16) est propre à moduler une pression de commande au sein de la conduite de commande pneumatique (14) destinée à commander l'autre véhicule ferroviaire en mode secouru,
le dispositif de mesure de pression (18) étant propre à contrôler en continu, pendant toute la phase de secours de l'autre véhicule ferroviaire en mode secouru, la valeur de la pression au sein de la conduite de commande pneumatique (14) connectable entre les deux véhicules ferroviaires distincts et à activer électriquement la ligne de freinage d'urgence dudit véhicule (V) ferroviaire à commande électrique de freinage en mode secourant lorsque ladite valeur appartient à une plage de pression prédéterminée,
le convertisseur (26) étant avantageusement propre à transformer en continu la pression au sein de la conduite de commande pneumatique en un signal électrique propre à être retransmis par ladite carte électronique (C) à l'ensemble de lignes électriques de commande de freinage de service (BFS) tant que la valeur de la pression au sein de la conduite de commande pneumatique (14) reste en dehors de ladite plage de pression prédéterminée.

7. Système selon les revendications 4 et 5, dans lequel, en mode secouru, ladite conduite de commande pneumatique (14) connectable entre les deux véhicules ferroviaires distinctes est propre à recevoir une pression de commande émise par l'autre véhicule ferroviaire en mode secourant,
le dispositif de mesure de pression (18) étant propre à contrôler en continu, pendant toute la phase de secours dudit véhicule ferroviaire à commande électrique de freinage en mode secouru, la valeur de la pression au sein de la conduite de commande pneumatique (14) connectable entre les deux véhicules ferroviaires distincts et à activer électriquement la ligne de freinage d'urgence (BFU) dudit véhicule ferroviaire à commande électrique de freinage en mode secouru lorsque ladite valeur appartient à une plage de pression prédéterminée,
le convertisseur (26) étant propre à transformer en continu la pression au sein de la conduite de commande pneumatique (14) en un signal électrique propre à être retransmis par ladite carte (C) électronique à l'ensemble de lignes électriques de commande de freinage de service (BFS) tant que la valeur de la pression au sein de la conduite de commande pneumatique (14) reste en dehors de ladite plage de pression prédéterminée.

8. Véhicule (V) ferroviaire à commande électrique de freinage, **caractérisé en ce qu'**il comprend un système d'interface de secours selon l'une quelconque des revendications précédentes.

9. Procédé de mise en œuvre d'une opération de secours entre deux véhicules ferroviaires distincts comprenant au moins un véhicule ferroviaire à commande électrique de freinage, le procédé étant propre à être mis en œuvre par un système d'interface de secours tel que décrit dans une des revendications 1 à 7 et embarqué à bord d'une voiture (10), notamment d'extrémité, du véhicule ferroviaire à commande électrique de freinage, le procédé étant propre à mettre en œuvre un mode secourant et/ou un mode secouru, le procédé comprenant :
- dans le mode secourant les étapes suivantes :
- une modulation (58) par un dispositif de modulation dudit système d'interface de secours d'une pression de commande au sein d'une conduite de commande pneumatique connectable entre les deux véhicules ferroviaires distincts, ladite pression de commande étant destinée à commander l'autre véhicule ferroviaire,
- un contrôle (62) continu par un dispositif de mesure de pression dudit système d'interface de secours, pendant toute la phase de secours de l'autre véhicule ferroviaire en mode secouru, de la valeur de la pression au sein de la conduite de commande pneumatique connectable entre les deux véhicules ferroviaires distincts et une activation électrique d'une ligne de freinage d'urgence dudit véhicule ferroviaire à commande électrique de freinage en mode secourant lorsque ladite valeur appartient à une plage de pression prédéterminée, et
- avantageusement une transformation (64) continue, par un convertisseur de pression en un signal électrique dudit système d'interface de secours, de la pression au sein de la conduite de commande pneumatique en un signal électrique propre à être retransmis par ladite carte électronique à un ensemble de lignes électriques de commande de freinage de service tant que la valeur de la pression au sein de la conduite de commande pneumatique reste en dehors de ladite plage de pression prédéterminée.
- dans le mode secouru les étapes suivantes :
- une réception (60) au sein de la conduite de commande pneumatique connectable entre les deux véhicules ferroviaires distincts d'une pression de commande émise par l'autre véhicule ferroviaire en mode secourant,
- un contrôle (62) continu par un dispositif de mesure de pression dudit système d'interface de secours, pendant toute la phase de secours dudit véhicule ferroviaire à commande électrique de freinage en mode secouru, de la valeur de la pression au sein de la conduite de commande pneumatique connectable entre les deux véhicules ferroviaires distincts et une activation électrique d'une ligne de freinage d'urgence dudit véhicule ferroviaire à commande électrique de freinage en mode secouru lorsque ladite valeur appartient à une plage de pression prédéterminée,
- une transformation (64) continue, par un convertisseur de pression en un signal électrique dudit système d'interface de secours, de la pression au sein de la conduite de commande pneumatique en un signal électrique propre à être retransmis par ladite carte électronique à un ensemble de lignes électriques de commande de freinage de service tant que la valeur de la pression au sein de la conduite de commande pneumatique reste en dehors de ladite plage de pression prédéterminée.

## Patentansprüche

1. Notfall-Schnittstellensystem (S) zwischen zwei verschiedenen Schienenfahrzeugen, umfassend mindestens ein Schienenfahrzeug (V) mit elektrischer Bremssteuerung, wobei das System geeignet ist, um an Bord eines Wagens (10), insbesondere eines Endwagens, des Schienenfahrzeugs mit elektrischer Bremssteuerung mitgeführt zu werden, **dadurch gekennzeichnet, dass** das System (S) mindestens Folgendes umfasst:
- eine pneumatische Steuerleitung (14), die zwischen den zwei verschiedenen Schienenfahrzeugen verbunden werden kann,
- eine Druckmodulationsvorrichtung (16), wovon ein Eingang geeignet ist, um mit einer elektrischen Notbremsleitung (BFU) verbunden zu werden, und wovon ein Ausgang geeignet ist, um mit der pneumatischen Steuerleitung (14) verbunden zu werden,
- eine Druckmessvorrichtung (18), wovon ein Eingang geeignet ist, um mit der pneumatischen Steuerleitung (14) verbunden zu werden, und wovon ein Ausgang geeignet ist, um mit der elektrischen Notbremsleitung (BFU) verbunden zu werden.

2. System nach Anspruch 1, wobei der Einsatz der pneumatischen Steuerleitung (14) innerhalb des Schienenfahrzeugs (V) mit elektrischer Bremssteuerung auf den Endwagen (10) des Schienenfahrzeugs (V) mit elektrischer Bremssteuerung beschränkt ist.

3. System nach Anspruch 1 oder 2, wobei die Druckmodulationsvorrichtung (16) ein Notentlastungsmodul (20) und ein Regelungsmodul des Drucks (22) auf einen vorbestimmten Druck umfasst.

4. System nach einem der vorherigen Ansprüche, ferner umfassend einen Mehrpositionsschalter (24), der abhängig von seiner Position einen der Betriebsmodi des Notfall-Schnittstellensystems aktiviert, die zu der Gruppe gehören, die mindestens Folgendes umfasst:
- einen Notbetrieb des Schienenfahrzeugs mit elektrischer Bremssteuerung, der vorzugsweise mindestens geeignet ist, um einen Notbetrieb einer Batterie des Fahrzeugs oder eine von dem rettenden Schienenfahrzeug bereitgestellte Stromversorgung zu aktivieren;
- einen Rettungsbetrieb des Schienenfahrzeugs mit elektrischer Bremssteuerung.

5. System nach einem der vorherigen Ansprüche, ferner umfassend:
- einen Druckwandler (26) in ein elektrisches Signal,
- eine elektronische Karte (C), die geeignet ist, um in ein elektronisches Bremssteuerungsmodul (28) integriert zu sein,
wobei ein Eingang des Wandlers (26) geeignet ist, um mit der pneumatischen Steuerleitung (14) verbunden zu sein, und ein Ausgang des Wandlers (26) geeignet ist, um mit einem Eingang der elektronischen Karte (C) verbunden zu sein, wovon ein Ausgang geeignet ist, um mit einer Einheit von elektrischen Betriebsbremssteuerleitungen (BFS) verbunden zu sein, die von der elektrischen Notbremsleitung (BFU) getrennt sind.

6. System nach den Ansprüchen 4 und 5, wobei, im Rettungsbetrieb, die Druckmodulationsvorrichtung (16) geeignet ist, um einen Steuerdruck innerhalb der pneumatischen Steuerleitung (14) zu modulieren, der dazu bestimmt ist, das andere Schienenfahrzeug im Notbetrieb zu steuern,
wobei die Druckmessvorrichtung (18) geeignet ist, um während der gesamten Notphase des anderen Schienenfahrzeugs im Notbetrieb kontinuierlich den Wert des Drucks innerhalb der pneumatischen Steuerleitung (14), die zwischen den zwei verschiedenen Schienenfahrzeugen verbunden werden kann, zu überwachen und die Notbremsleitung des Schienenfahrzeugs (V) mit elektrischer Bremssteuerung im Rettungsbetrieb elektrisch zu aktivieren, wenn der Wert zu einem vorgegebenen Druckbereich gehört,
wobei der Wandler (26) vorteilhafterweise geeignet ist, um den Druck innerhalb der pneumatischen Steuerleitung kontinuierlich in ein elektrisches Signal umzuwandeln, das geeignet ist, um von der elektronischen Karte (C) an die Einheit der elektrischen Betriebsbremssteuerleitungen (BFS) weitergeleitet zu werden, solange der Wert des Drucks innerhalb der pneumatischen Steuerleitung (14) außerhalb des vorbestimmten Druckbereichs bleibt.

7. System nach den Ansprüchen 4 und 5, wobei im Notbetrieb die pneumatische Steuerleitung (14), die zwischen den zwei verschiedenen Schienenfahrzeugen verbunden werden kann, geeignet ist, um einen Steuerdruck zu empfangen, der von dem anderen Schienenfahrzeug im Rettungsbetrieb ausgegeben wird, die Druckmessvorrichtung (18) geeignet ist, während der gesamten Notphase des Schienenfahrzeugs mit elektrischer Bremssteuerung im Notbetrieb den Wert des Drucks innerhalb der pneumatischen Steuerleitung (14), die zwischen den zwei verschiedenen Schienenfahrzeugen verbunden werden kann, kontinuierlich zu überwachen und die Notbremsleitung (BFU) des Schienenfahrzeugs mit elektrischer Bremssteuerung im Notbetrieb elektrisch zu aktivieren, wenn der Wert zu einem vorbestimmten Druckbereich gehört,
wobei der Wandler (26) geeignet ist, um den Druck innerhalb der pneumatischen Steuerleitung (14) kontinuierlich in ein elektrisches Signal umzuwandeln, das geeignet ist, um von der elektronischen Karte (C) an die Einheit der elektrischen Betriebsbremssteuerleitungen (BFS) weitergeleitet zu werden, solange der Wert des Drucks innerhalb der pneumatischen Steuerleitung (14) außerhalb des vorbestimmten Druckbereichs bleibt.

8. Schienenfahrzeug (V) mit elektrischer Bremssteuerung, **dadurch gekennzeichnet, dass** es ein Notfall-Schnittstellensystem nach einem der vorherigen Ansprüche umfasst.

9. Verfahren zum Durchführen eines Notfallvorgangs zwischen zwei verschiedenen Schienenfahrzeugen, umfassend mindestens ein Schienenfahrzeug mit elektrischer Bremssteuerung, wobei das Verfahren geeignet ist, um von einem Notfall-Schnittstellensystem durchgeführt zu werden, wie es in einem der Ansprüche 1 bis 7 beschrieben ist und an Bord eines Wagens (10), insbesondere eines Endwagens, des Schienenfahrzeugs mit elektrischer Bremssteuerung mitgeführt wird, wobei das Verfahren geeignet ist, um einen Rettungsbetrieb und/oder einen Notbetrieb zu implementieren, das Verfahren umfassend:
- im Rettungsbetrieb die folgenden Schritte:
- ein Modulieren (58) durch eine Modulationsvorrichtung des Notfall-Schnittstellensystems eines Steuerdrucks innerhalb einer pneumatischen Steuerleitung, die zwischen den zwei verschiedenen Schienenfahrzeugen verbunden werden kann, wobei der Steuerdruck dazu bestimmt ist, das andere Schienenfahrzeug zu steuern,
- ein kontinuierliches Überwachen (62) durch eine Druckmessvorrichtung des Notfall-Schnittstellensystems, während der gesamten Notphase des anderen Schienenfahrzeugs im Notbetrieb, des Druckwerts innerhalb der pneumatischen Steuerleitung, die zwischen den zwei verschiedenen Schienenfahrzeugen verbunden werden kann, und eine elektrische Aktivierung einer Notbremsleitung des Schienenfahrzeugs mit elektrischer Bremssteuerung im Rettungsbetrieb, wenn der Wert in einen vorbestimmten Druckbereich fällt, und
- vorteilhafterweise ein kontinuierliches Umwandeln (64) des Drucks innerhalb der pneumatischen Steuerleitung in ein elektrisches Signal des Notfall-Schnittstellensystems durch einen Druckwandler in ein elektrisches Signal, das geeignet ist, um von der elektronischen Karte an eine Einheit von elektrischen Betriebsbremssteuerleitungen weitergeleitet zu werden, solange der Wert des Drucks innerhalb der pneumatischen Steuerleitung außerhalb des vorbestimmten Druckbereichs bleibt.
- im Notbetrieb die folgenden Schritte:
- ein Empfangen (60) innerhalb der pneumatischen Steuerleitung, die zwischen den zwei verschiedenen Schienenfahrzeugen verbunden werden kann, von einem Steuerdruck, der von dem anderen Schienenfahrzeug im Rettungsbetrieb ausgegeben wird,
- ein kontinuierliches Überwachen (62) durch eine Druckmessvorrichtung des Notfall-Schnittstellensystems, während der gesamten Notphase des Schienenfahrzeugs mit elektrischer Bremssteuerung im Notbetrieb, des Druckwerts innerhalb der pneumatischen Steuerleitung, die zwischen den zwei verschiedenen Schienenfahrzeugen verbunden werden kann, und eine elektrische Aktivierung einer Notbremsleitung des Schienenfahrzeugs mit elektrischer Bremssteuerung im Notbetrieb, wenn der Wert in einen vorbestimmten Druckbereich fällt,
- ein kontinuierliches Umwandeln (64) des Drucks innerhalb der pneumatischen Steuerleitung in ein elektrisches Signal des Notfall-Schnittstellensystems durch einen Druckwandler in ein elektrisches Signal, das geeignet ist, um von der elektronischen Karte an eine Einheit von elektrischen Betriebsbremssteuerleitungen weitergeleitet zu werden, solange der Wert des Drucks innerhalb der pneumatischen Steuerleitung außerhalb des vorbestimmten Druckbereichs bleibt.

## Claims

1. An emergency interface system (S) between two separate rail vehicles comprising at least one electrically braked rail vehicle (V), the system being suitable for being carried aboard a carriage (10), in particular an end carriage, of the electrically braked rail vehicle, **characterised in that** the system (S) comprises at least:
- a pneumatic control line (14) connectable between the two separate rail vehicles,
- a pressure modulation device (16), an input of which is adapted to be connected to an electric emergency brake line (BFU), and an output of which is adapted to be connected to said pneumatic control line (14),
- a pressure measuring device (18), an input of which is adapted to be connected to said pneumatic control line (14) and an output of which is adapted to be connected to said electric emergency brake line (BFU).

2. The system according to claim 1, wherein the deployment of the pneumatic control line (14) within the electrically braked rail vehicle (V) is restricted to the end carriage (10) of the electrically braked rail vehicle (V).

3. The system according to claim 1 or 2, wherein the pressure modulation device (16) comprises an emergency exhaust module (20) and a pressure regulation module (22) at a predetermined pressure.

4. The system according to any of the preceding claims, further comprising a multi-position switch (24) activating, depending on its position, one of the operating modes of the emergency interface system belonging to the group comprising at least:
- a backed-up mode of said electrically braked rail vehicle, preferably at least suitable for activating a backup mode of a battery of said vehicle or a power supply provided by the backup rail vehicle;
- a backup mode of said electrically braked rail vehicle.

5. The system according to any of preceding claims, further comprising:
- a converter (26) to convert pressure into an electrical signal,
- an electronic board (C) suitable for integration into an electronic brake control module (28),
an input of the converter (26) being adapted to be connected to the pneumatic control line (14) and an output of the converter (26) being adapted to be connected to an input of the electronic board (C), an output of which is adapted to be connected to a set of electrical service brake control lines (BFS) separate from the electrical emergency brake line (BFU).

6. The system according to claims 4 and 5, wherein, in backup mode, the pressure modulating device (16) is adapted to modulate a control pressure within the pneumatic control line (14) for controlling the other rail vehicle in backed-up mode,
the pressure measuring device (18) being suitable for continuously monitoring, throughout the emergency phase of the other rail vehicle in backup mode, the value of the pressure within the pneumatic control line (14) connectable between the two separate rail vehicles and for electrically activating the emergency brake line of said electrically controlled rail vehicle (V) in backup mode when said value belongs to a predetermined pressure range, the converter (26) being advantageously adapted to continuously transform the pressure within the pneumatic control line into an electrical signal adapted to be retransmitted by said electronic board (C) to the set of electrical service brake control lines (BFS) as long as the value of the pressure within the pneumatic control line (14) remains outside said predetermined pressure range.

7. The system according to claims 4 and 5, wherein, in standby mode, said pneumatic control line (14) connectable between the two separate rail vehicles is adapted to receive a control pressure from the other rail vehicle in backup mode,
the pressure measuring device (18) being suitable for continuously monitoring, throughout the emergency phase of said electrically braked rail vehicle in backup mode, the value of the pressure within the pneumatic control line (14) connectable between the two separate rail vehicles and for electrically activating the emergency brake line of said electrically braked rail vehicle (V) in backed-up mode when said value belongs to a predetermined pressure range,
the converter (26) being adapted to continuously transform the pressure within the pneumatic control line (14) into an electrical signal adapted to be retransmitted by said electronic board (C) to the set of electrical service brake control lines (BFS) as long as the value of the pressure within the pneumatic control line (14) remains outside said predetermined pressure range.

8. An electrically braked rail vehicle (V), **characterised in that** it comprises an emergency interface system according to any of the preceding claims.

9. A method of implementing an emergency operation between two separate rail vehicles comprising at least one electrically braked rail vehicle, the method being suitable for implementation by an emergency interface system as described in one of claims 1 to 7 and carried aboard a carriage (10), in particular an end carriage, of the electrically braked rail vehicle, the method being suitable for implementing a backup mode and/or a backed-up mode, the method comprising:
- in the backup mode, the following steps:
- a modulation (58) by a modulation device of said emergency interface system of a control pressure within a connectable pneumatic control line between the two separate rail vehicles, said control pressure being intended to control the other rail vehicle,
- a continuous monitoring (62), by a pressure measuring device of said emergency interface system, during the whole emergency phase of the other rail vehicle in backed-up mode, of the value of the pressure within the connectable pneumatic control line between the two separate rail vehicles and an electrical activation of an emergency brake line of said electrically braked rail vehicle in backup mode when said value belongs to a predetermined pressure range, and
- advantageously, a continuous transformation (64), by a converter to convert pressure into an electrical signal of said emergency interface system, of the pressure within the pneumatic control line into an electrical signal suitable for being retransmitted by said electronic board to a set of electrical service brake control lines as long as the value of the pressure within the pneumatic control line remains outside said predetermined pressure range.
- in the backed-up mode, the following steps:
- a reception (60), within the connectable pneumatic control line between the two separate rail vehicles, of a control pressure sent by the other rail vehicle in backup mode,
- a continuous monitoring (62), by a pressure measuring device of said emergency interface system, during the whole emergency phase of said electrically braked rail vehicle in backed-up mode, of the value of the pressure within the connectable pneumatic control line between the two separate rail vehicles and an electrical activation of an emergency brake line of said electrically braked rail vehicle in backed-up mode when said value belongs to a predetermined pressure range,
- a continuous transformation (64), by a converter to convert pressure into an electrical signal of said emergency interface system, of the pressure within the pneumatic control line into an electrical signal suitable for being retransmitted by said electronic board to a set of electrical service brake control lines as long as the value of the pressure within the pneumatic control line remains outside said predetermined pressure range.
